# EUROPÄISCHE PATENTSCHRIFT

(11) **EP 2 407 303 B1**
(45) Veröffentlichungstag und Bekanntmachung des Hinweises auf die Patenterteilung: **09.10.2013**
(21) Anmeldenummer: 11173783.9
(22) Anmeldetag: 13.07.2011
(51) Int. Cl.: B32B 27/00, B32B 33/00, E01C 13/04, E04F 15/10, A47G 27/02

(54) **Bodenbelag**
Floor covering
Revêtement de sol

(30) Priorität: 13.07.2010 AT 11832010
(43) Veröffentlichungstag der Anmeldung: 18.01.2012
(73) Patentinhaber: Tüchler Bühnen- & Textiltechnik GmbH, 1220 Wien (AT)
(72) Erfinder: Lach, Christoph, 1190 Wien (AT)
(74) Vertreter: Grabherr, Claudia

(56) Entgegenhaltungen:
- WO-A1-00/17467
- DE-U1- 20 114 787
- DE-U1-202006 012 824
- FR-A1- 2 108 916
- US-A- 3 857 749
- US-A- 4 942 072
- US-A1- 2006 127 647
- DATABASE WPI Week 197929 Thomson Scientific, London, GB; AN 1979-53408B XP002661391, & JP 54 071182 A (KANSAI PAINT CO LTD) 7. Juni 1979 (1979-06-07)
- DATABASE WPI Week 199330 Thomson Scientific, London, GB; AN 1993-240391 XP002661392, & JP 5 163824 A (TAJIMA KK) 29. Juni 1993 (1993-06-29)

## Beschreibung

Die Erfindung betrifft ein transportables Bodensegment mit mindestens einer Absorptionsschicht und mindestens einer damit verbundenen Lastverteilungsschicht, wobei zur lösbaren Verbindung der Bodensegmente umfangsseitig korrespondierende Aufnahmeabschnitte und Verbindungszungen vorgesehen sind.

Im Bereich von Ballett, Tanz, Theater, Akrobatik, Zirkus und ähnlichem werden zur Gelenkschonung der Akteure stoßdämpfende Bodenbeläge benötigt. Diese Böden müssen für die gewünschten Bereiche leicht und rasch auf- und abbaubar sowie unter geringem Platzverbrauch lagerbar und transportierbar sein. Das Flächengewicht und Lagervolumen sollte insbesondere mit Hinblick auf den Transport aber gering sein.

Derzeit gibt es Böden am Markt, die sehr gute stoßabsorbierende Eigenschaften aufweisen. Diese sind jedoch einerseits nur mit teils erheblichem Aufwand auf- und abbaubar, sowie andererseits aufgrund deren Dicke und Gewicht sowohl aufwendig zu lagern, als auch schwierig und teuer zu transportieren.

Aus diesem Grund sind aus dem Stand der Technik portable Bödensegmente bekannt, die stets auf einem Verbund einer etwa 20mm dicken Holz- bzw. Mehrschichtplatte als Lastverteilungsschicht und daran zur Dämpfung angebrachten Kunststoffpaketen, die die Absorptionsschicht bilden, beruhen. Die Verbindung der einzelnen Bodensegmente erfolgt über ein Nut und Feder System oder über andere Verriegelungsmechanismen.

Ähnliche Konstruktionen kommen bei Festinstallationen zur Anwendung. Die so konstruierten Böden werden als flächenelastische Böden bezeichnet.

Die WO 00/17467 A1, FR 2108916 A1, US 3857749 A, sowie DE 20114787 U1 zeigen transportable Bodensegmente mit einer Absorptionsschicht und einer damit verbundenen Lastverteilungsschicht, wobei zur lösbaren Verbindung der Bodensegmente umfangsseitig korrespondierende Aufnahmeabschnitte und Verbindungszungen vorgesehen sind. Die Druckschriften offenbaren keine Verbindung der Absorptionsschicht mit der Lastverteilungsschicht durch einen dauerelastischen süanmodifizierten Polymerkleber.

Die US 2006/127647 A1 zeigt ein transportables Bodensegment mit einer ersten Schicht und einer damit verbundenen zweiten Schicht, wobei zur lösbaren Verbindung der Bodensegmente umfangsseitig korrespondierende Aufnahmeabschnitte und Verbindungszungen vorgesehen sind. Weder wird eine Verklebung der beiden Schichten durch einen dauerelastischen silanmodifizierten Polymerkleber gezeigt, noch handelt es sich bei den beiden Schichten um eine Absorptionsschicht bzw. eine Lastverteilungsschicht, da die beiden Schichten die gleichen elastomerischen Eigenschaften aufweisen.

Die US 4942072 A zeigt ein transportables Teppichstück, wobei zur lösbaren Verbindung umfangsseitig korrespondierende Aufnahmeabschnitte und Verbindungszungen vorgesehen sind. Das Teppichstück ist einlagig.

Die DE 20 2006 012824 U1 zeigt ein Sanitärbodensegment bestehend aus einer Unterschicht auf Basis eines Polymerschaumstoffes, auf das eine Sanitäroberfläche aus einem Kunststoff, Keramik oder Naturstein durch einen dauerelastischen silanmodifizierten Polymerkleber aufgebracht ist.

Eine weitere Möglichkeit, einen stoßdämpfenden Boden zu erhalten, ist der Einsatz von vollflächig dämpfenden Materialien wie Schaumstoffmatten mit geeigneten Oberböden, bei denen es sich zumeist um PVC-Böden handelt. Durch diese Konstruktion werden mischeiastische Böden erreicht, die aber stets mit dem Unterboden verklebt werden und daher nicht portabel eingesetzt werden können.

Die Problematik besteht darin, dass es einerseits zur Erreichung eines geeigneten mischelastischen Bodens nötig ist, mehrere Schichten unterschiedlicher Steifheit und Dämpfung zu verkleben, jedoch andererseits aufgrund des gewünschten geringen Volumens eine Gesamtdicke von etwa 1,5 Zentimeter nicht überschritten werden soll. Derartig dünne Bodensegmente erlauben keinen Aufnahme gewöhnlicher Verriegelungsmechanismen.

Zudem werden die einzelnen Lagen bei Festinstallation üblicherweise nur mit schwach haftenden Klebern verarbeitet, da sonst bei fester Verklebung ein Sandwich entstehen würde, der die dämpfenden Eigenschaften zunichte machen würde.

Die technische Aufgabe besteht demnach darin, ein transportables Bodensegment zu entwickeln, dass bei geringer Dicke die gewünschte Stoßdämpfung und Mischetastizität aufweist, wobei die verwendet Lagen dauerhaft elastisch miteinander verbunden sind, die Verriegelungsmechanismen ein einfaches Auf- und Abbauen erlauben, und Sandwichbildung vermieden wird. Darüber hinaus müssen Brandschutznormen, beispielsweise die Brandklasse Cfl-S1 oder die EN 13501 sowie gewisse Kraftabbau- und Verformungswerte nach EN 14904 erfüllt werden.

Diese technische Aufgabe wird erfindungsgemäß dadurch gelöst, dass die Lastverteilungsschicht mehrere Platten umfasst, die als glasfaserverstärkte Polyvinylchloridplatten oder als Sperrholzplatten ausgeführt sind und die Absorptionsschicht mehrere Lagen miteinander verbundener Dämpfungsschichten umfasst, wobei zur Verbindung der Absorptionsschicht mit der Lastverteilungsschicht ein dauerelastischer lösungsmittelfreier und altersbeständiger silanmodifizierter Polymerkleber vorgesehen ist.

Die Aufnahmeabschnitte und Verbindungszungen sind puzzleförmig ausgeführt und ermöglichen das schnelle Auf- und Abbauen des Bodens in praktisch beliebigen Formen.

Indem die Absorptionsschicht mehrere Lagen miteinander verbundener Dämpfungsschichten umfasst, kann eine Anpassung der Dämpfungseigenschaften an die jeweilige Anwendung erreicht werden.

Die Dämpfungsschichten können als Schaumstoffschichten ausgeführt sein. Die Dämpfungsschichten können gleiche oder unterschiedliche Dicke, Steifheit oder Dämpfung aufweisen.

Beispielsweise ist es für den Tanzeinsatz oft ausreichend, einen Kraftabbau von 25% bis 35% zu erreichen, während für Sportböden eine deutlich höhere Elastizität gewünscht ist. Der erfindungsgemäße schichtartige Aufbau erlaubt eine derartige Wahl der erreichten Elastizität.

Die Platten der Lastverteilungsschicht können als mehrschichtige, miteinander verleimte und/oder verpresste Platten, insbesondere Sperrholzplatten (Verbundelemente) ausgeführt sein.

Zur Verbindung der Platten der Lastverteilungsschicht miteinander kann insbesondere ein dauerelastischer, lösungsmittelfreier und altersbeständiger silanmodifizierter Polymerkleber verwendet werden, wodurch die oben genannte Sandwichbildung vermieden wird.

Darüber hinaus kann die Lastverteilungsschicht mit einem Oberbelag aus Kunststoff, Linoleum oder dergleichen beschichtet sein. Die Gesamtdicke des Bodensegments kann der Anwendung angepasst sein und kann im Bereich von 1 cm bis 3cm, vorzugsweise 1,5cm, liegen. Alle verwendeten Materialien können Brandschutznormen, beispielsweise die Brandklasse Cfl-S1 oder die EN 13501 erfüllen.

Die Aufnahmeabschnitte können insbesondere als Aussparungen ausgeführt sein, die sich am Umfang des Bodensegments erstrecken und deren Querschnitte Trapeze definieren, deren längere Seiten dem Mittelpunkt des Bodensegments zugewandt sind. Korrespondierend dazu sind die Verbindungszungen als Stege ausgeführt, die sich am Umfang des Bodensegments erstrecken und Trapeze definieren, deren längere Seiten dem Mittelpunkt des Bodensegments abgewandt sind. Durch diese erfindungsgemäße Ausführung der Verbindungselemente greifen die Verbindungszungen nahtlos in die Aufnahmeabschnitte ein, wodurch eine passgenaue und lückenlose Verlegung garantiert wird, obwohl die geringe Dicke der Elemente das Vorsehen konventioneller Verriegelungselemente nicht erlaubt.

Eine weitere Verbesserung der Passgenauigkeit und Haltbarkeit bei der Verbindung der Bodensegmente kann dadurch erfolgen, dass Seitenaufnahmeabschnitte und Eckenaufnahmeabschnitte vorgesehen sind, wobei die Seitenaufnahmeabschnitte entlang einer Seite und die Eckenaufnahmeabschnitte an einer Ecke des Bodensegments ausgeführt sind.
Dazu korrespondieren Seitenverbindungszungen und Eckenverbindungszungen, wobei die Seitenverbindungszungen entlang einer Seite und die Eckenverbindungszungen an einer Ecke des Bodensegments ausgeführt sind. Die Eckenverbindungszungen passen nahtlos in die Eckenaufnahmeabschnitte und ermöglichen damit eine zweidimensionale Fixierung in den Ecken, wie sie bei gewöhnlichen Nut-Federsystemen, die stets nur entlang einer Seite ausgeführt sind, nicht möglich ist. Dennoch erlaubt dieses Verriegelungssystem ein einfaches und schnelles Abbauen der Elemente nach der Benutzung, ohne die Verriegelungselemente in Mitleidenschaft zu ziehen.

Weitere erfindungsgemäße Merkmale sind den Ansprüchen, der Beschreibung und den Figuren zu entnehmen.

Das erfindungsgemäße Bodensegment wird im Folgenden ohne Einschränkung an Hand der Figuren 1 bis 4 beschrieben. Es zeigen
- Fig. 1:: eine schematische Darstellung eines erfindungsgemäßen Bodensegments in dreidimensionaler Darstellung;
- Fig. 2:: eine schematische Darstellung des Querschnitts eines erfindungsgemäßen Bodensegments;
- Fig. 3:: eine schematische Aufsicht des erfindungsgemäßen Bodensegments aus Fig. 1;
- Fig. 4:: eine schematische Aufsicht des erfindungsgemäßen Bodensegments aus Fig. 1 in aufgebautem Zustand.

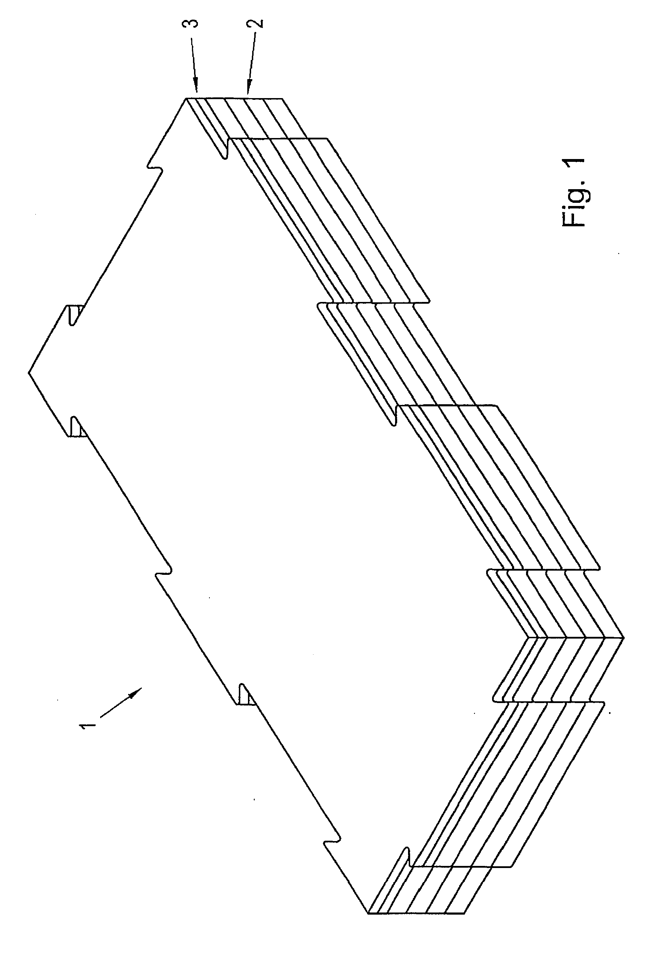

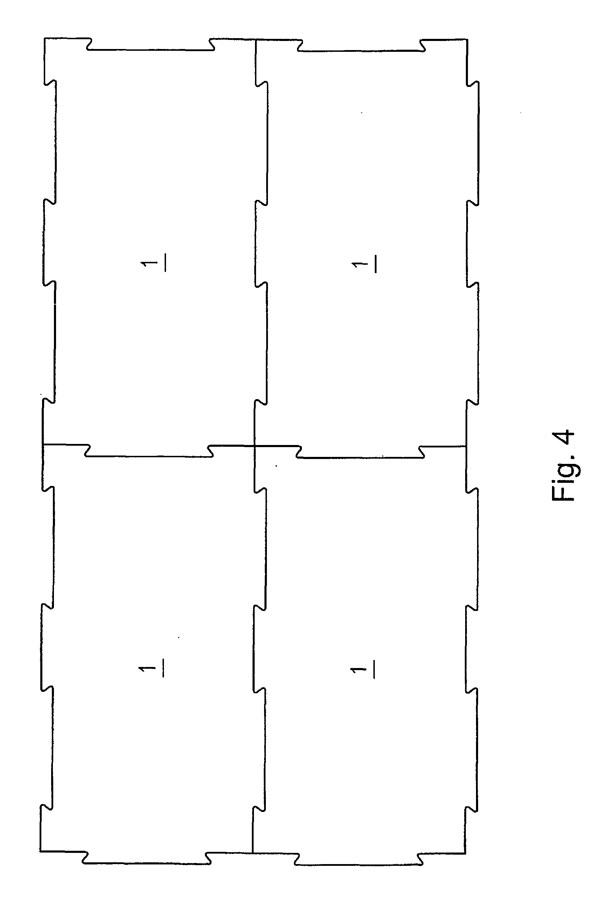

Das erfindungsgemäße Bodensegment (1) ist in Fig. 1 in einer dreidimensionalen Darstellung gezeigt. In dieser ersten erfindungsgemäßen Ausführungsform ist eine aus mehreren Lagen bestehende Absorptionsschicht (2) und eine, ebenfalls mehrlagige Lastverteilungsschicht (3) gezeigt. Das Bodensegment (1) verfügt umfangsseitig zur lösbaren Verbindung über Aufnahmeabschnitte und damit korrespondierende Verbindungszungen, die bei der Beschreibung von Fig. 4 genauer definiert werden.

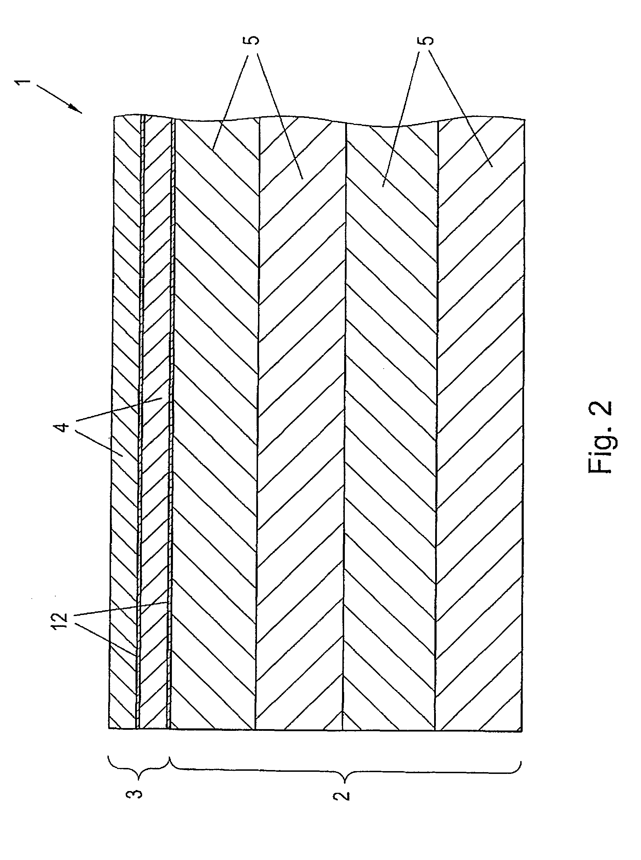

Fig. 2 zeigt den Querschnitt eines erfindungsgemäßen Bodensegments (1). Das Bodensegment (1) umfasst eine Absorptionsschicht (2) und eine daran angebrachte Lastverteilungsschicht (3). Die Lastverteilungsschicht ist im vorliegenden Ausführungsbeispiel aus mehreren Dämpfungsschichten (5) gebildet, die miteinander verbunden, beispielsweise verklebt, sind. Die Dämpfungsschichten sind vorzugsweise Schaumstofflagen, die insbesondere unterschiedliche Dicke, Steifheit und Dämpfung aufweisen können, um an die spezielle Anforderung angepasst zu sein.

Mit der Absorptionsschicht verbunden ist eine Lastverteilungsschicht (3), die im vorliegenden Ausführungsbeispiel zwei miteinander verbundene Platten (4) umfasst. Die Platten (4) können als Verbundelemente ausgeführt sein, beispielsweise als mehrschichtige, miteinander verleimte Sperrholzplatten. Es ist aber auch erfindungsgemäß vorgesehen, dass es sich bei den Platten (4) um Platten aus Kunststoff oder einem anderen, trittfesten Material handelt. Die Platten (4) sind mit einem Klebstoff (12) miteinander und mit der Lastverteilungsschicht (2) verklebt oder auf andere Art verbunden. Im vorliegenden Ausführungsbeispiel erfolgt eine Verklebung unter Verwendung eines dauerelastischen silanmodifizierten Polymerklebers. Erfindungsgemäß ist vorgesehen sein, dass auf die Lastverteilungsschicht (3) eine weitere Schicht aufgetragen werden kann, die als Oberbelag für den Boden dient. Dabei kann es sich beispielsweise um Kunststoff, Linoleum oder einen anderen, für den Anwendungsfall passenden Oberbelag handeln.

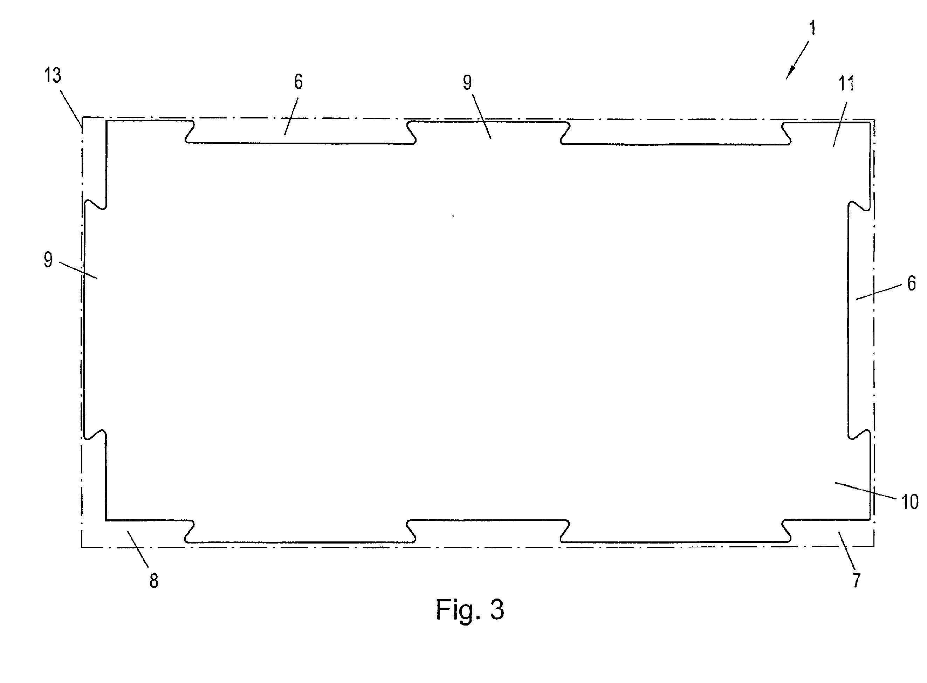

Fig. 3 zeigt in einer Draufsicht des Bodensegments (1) die Ausführung der Verbindungsmittel, die dazu geeignet sind, die Bodensegmente (1) miteinander lösbar zu verbinden, sodass aus mehreren Bodensegmenten (1) eine größere Fläche mit einem Boden, insbesondere Tanzboden oder Sportboden, versehen werden kann. Dazu verfügt das Bodensegment (1) umfangsseitig über Aufnahmeabschnitte (6, 7, 8) und Verbindungszungen (9, 10, 11). Diese Verbindungselemente werden insbesondere durch Fräsen oder Stanzen aus dem, mit der strichpunktierten Linie (13) angedeuteten Umriss des ursprünglichen Bodensegments gewonnen.

Die spezielle Formung der Verbindungselemente garantiert einen passgenauen Sitz ohne Zwischenraum, eine hohe Verbindungssteifigkeit, und eine bei Bedarf leichte Lösbarkeit der Verbindung. Die Aufnahmeabschnitte sind als umfangsseitige definierte Trapeze ausgeführt, deren längere Seite dem Mittelpunkt des Bodensegments (1) zugewandt sind, während die Verbindungszungen durch die übrig bleibenden Stege gebildet werden, die demnach Trapeze bilden, deren längere Seite dem Mittelpunkt des Bodensegments (1) abgewandt ist. Die Aufnahmeabschnitte und Verbindungszungen sind korrespondierend ausgeführt und ermöglichen damit einen passgenauen Zusammenbau der einzelnen Elemente.

Die Aufnahmeabschnitte (6, 7, 8) können unterteilt werden in Seitenaufnahmeabschnitte (6, 7) die sich an einer Längs- oder Querseite des Bodensegments (1) befinden, und Eckenaufnahmeabschnitte (8), die sich an den vier Ecken des Bodensegments befinden. Analog dazu sind Seitenverbindungszungen (9, 10) und Eckenverbindungszungen (11) vorgesehen. Insbesondere durch die Verbindung der Eckenaufnahmeabschnitte (8) mit dem korrespondierenden Eckenverbindungszungen (11) wird eine passgenaue Verbindung der Bodensegmente (1) ohne Spalten oder Zwischenräume ermöglicht.

Ein Beispiel eines aufgebauten Bodens mit Hilfe der erfindungsgemäßen Bodensegmente ist in Fig. 4 gezeigt.

Die Erfindung ist selbstverständlich nicht durch die beschriebenen Ausführungsformen beschränkt und erstreckt sich insbesondere auch auf andere, nicht rechteckförmig ausgeführte Bodensegmente. Beispielsweise kann es, für das jeweilige Anwendungsgebiet, vorteilhaft sein, quadratische oder sechseckige Bodensegmente vorzusehen, ohne den Rahmen der vorliegenden Erfindung zu überschreiten. Die Erfindung umfasst weiters sowohl das Bodensegment selbst, als auch das Bodensystem als solches, das durch Zusammenbau mehrerer erfindungsgemäßer Bodensegmente gebildet ist, und den dabei entstehenden Boden, der insbesondere als Tanz-, Sport- oder Gymnastikboden ausgeführt ist.

### Bezugszeichenliste

- 1: Bodensegment
- 2: Absorptionsschicht
- 3: Lastverteilungsschicht
- 4: Platte
- 5: Dämpfungsschicht
- 6: Seitenaufnahmeabschnitt
- 7: Seitenaufnahmeabschnitt
- 8: Eckenaufnahmeabschnitt
- 9: Seitenverbindungszunge
- 10: Seitenverbindungszunge
- 11: Eckenverbindungszunge
- 12: Polymerkleber
- 13: Umrisslinie

## Patentansprüche

1. Transportables Bodensegment (1) mit mindestens einer Absorptionsschicht (2) und mindestens einer damit verbundenen Lastverteilungsschicht (3), wobei zur lösbaren Verbindung der Bodensegmente (1) umfangsseitig korrespondierende Aufnahmeabschnitte (6, 7, 8) und Verbindungszungen (9, 10, 11) vorgesehen sind, **dadurch gekennzeichnet, dass** die Lastverteilungsschicht (3) mehrere Platten (4) umfasst, die als glasfaserverstärkte Polyvinylchloridplatten oder als Sperrholzplatten ausgeführt sind, und die Absorptionsschicht (2) mehrere Lagen miteinander verbundener Dämpfungsschichten (5) umfasst, wobei zur Verbindung der Absorptionsschicht (2) mit der Lastverteilungsschicht (3) ein dauerelastischer, lösungsmittelfreier und altersbeständiger silanmodifizierter Polymerkleber (12) vorgesehen ist.

2. Bodensegment (1) nach Anspruch 1, **dadurch gekennzeichnet, dass** die Dämpfungsschichten (5) gleiche oder unterschiedliche Dicke, Steifheit oder Dämpfung aufweisen.

3. Bodensegment (1) nach einem der Ansprüche 1 oder 2, **dadurch gekennzeichnet, dass** die Platten (4) als mehrschichtige, miteinander verleimte und/oder verpresste Platten ausgeführt sind.

4. Bodensegment (1) nach einem der Ansprüche 1 bis 3, **dadurch gekennzeichnet, dass** die Platten (4) miteinander durch einen dauerelastischen, lösungsmittelfreien und altersbeständigen silanmodifizierten Polymerkleber (12) verklebt sind.

5. Bodensegment (1) nach einem der Ansprüche 1 bis 4, **dadurch gekennzeichnet, dass** das Bodensegment (1) flächenelastisch, punktelastisch, oder mischelastisch ausgeführt ist.

6. Bodensegment (1) nach einem der Ansprüche 1 bis 5, **dadurch gekennzeichnet, dass** die Lastverteilungsschicht (3) mit einem Oberbelag aus Kunststoff oder Linoleum beschichtet ist.

7. Bodensegment (1) nach einem der Ansprüche 1 bis 6, **dadurch gekennzeichnet, dass** das Bodensegment (1) einen Kraftabbau nach EN 14904 von mehr als 25%, vorzugsweise 35% bis 40%, aufweist.

8. Bodensegment (1) nach einem der Ansprüche 1 bis 7, **dadurch gekennzeichnet, dass** das Bodensegment (1) eine Verformung nach EN 14904 von 1,1mm bis 1,5mm, vorzugsweise 1,3mm, aufweist.

9. Bodensegment (1) nach einem der Ansprüche 1 bis 8, **dadurch gekennzeichnet, dass** die Aufnahmeabschnitte (6, 7, 8) als Aussparungen ausgeführt sind, die sich am Umfang des Bodensegments (1) erstrecken und deren Querschnitte Trapeze definieren, deren längere Seiten dem Mittelpunkt des Bodensegments (1) zugewandt sind.

10. Bodensegment (1) nach einem der Ansprüche 1 bis 9, **dadurch gekennzeichnet, dass** Seitenaufnahmeabschnitte (6, 7) und Eckenaufnahmeabschnitte (8) vorgesehen sind, wobei die Seitenaufnahmeabschnitte (6, 7) entlang einer Seite und die Eckenaufnahmeabschnitte an einer Ecke des Bodensegments (1) ausgeführt sind.

11. Bodensegment (1) nach einem der Ansprüche 1 bis 10, **dadurch gekennzeichnet, dass** die Verbindungszungen (9, 10, 11) als Stege ausgeführt sind, die sich am Umfang des Bodensegments (1) erstrecken und deren Querschnitte Trapeze definieren, deren längere Seiten dem Mittelpunkt des Bodensegments (1) abgewandt sind.

12. Bodensegment (1) nach einem der Ansprüche 1 bis 11, **dadurch gekennzeichnet, dass** Seitenverbindungszungen (9, 10) und Eckenverbindungszungen (11) vorgesehen sind, wobei die Seitenverbindungszungen (9, 10) entlang einer Seite und die Eckenverbindungszungen (11) an einer Ecke des Bodensegments (1) ausgeführt sind.

## Claims

1. Transportable floor segment (1) having at least one absorption layer (2) and at least one load distribution layer (3) connected thereto, circumferentially corresponding receiving sections (6, 7, 8) and connecting tongues (9, 10, 11) being provided for releasably connecting the floor segments (1), **characterised in that** the load distribution layer (3) comprises a plurality of sheets (4) that are embodied as fibreglass-reinforced polyvinyl chloride sheets or as plywood sheets, and the absorption layer (2) comprises several thicknesses of interconnected cushioning layers (5), a permanently elastic, solvent-free and ageing-resistant silane-modified polymer adhesive (12) being provided for attaching the absorption layer (2) to the load distribution layer (3).

2. Floor segment (1) according to claim 1, **characterised in that** the cushioning layers (5) have the same or different thickness, stiffness or cushioning effect.

3. Floor segment (1) according to one of claims 1 or 2, **characterised in that** the sheets (4) are embodied as multi-layer sheets that are glued and/or pressed together.

4. Floor segment (1) according to one of claims 1 to 3, **characterised in that** the sheets (4) are adhered to one another by a permanently elastic, solvent-free and ageing-resistant silane-modified polymer adhesive (12).

5. Floor segment (1) according to one of claims 1 to 4, **characterised in that** the floor segment (1) is embodied to be elastic over its surface, elastic at points or to have a mixed elasticity.

6. Floor segment (1) according to one of claims 1 to 5, **characterised in that** the load distribution layer (3) is covered with an upper covering of plastics or lineoleum.

7. Floor segment (1) according to one of claims 1 to 6, **characterised in that** the floor segment (1) has a force reduction according to EN 14904 of more than 25%, preferably 35% to 40%.

8. Floor segment (1) according to one of claims 1 to 7, **characterised in that** the floor segment (1) has a deformation according to EN 14904 of 1.1 mm to 1.5 mm, preferably 1.3 mm.

9. Floor segment (1) according to one of claims 1 to 8, **characterised in that** the receiving sections (6, 7, 8) are embodied as indentations that extend around the periphery of the floor segment (1) and the cross-sections of which define trapezia the longer sides of which face the centre of the floor segment (1).

10. Floor segment (1) according to one of claims 1 to 9, **characterised in that** side receiving sections (6, 7) and corner receiving sections (8) are provided, the side receiving sections (6, 7) being formed along one side and the corner receiving sections being formed at a corner of the floor segment (1).

11. Floor segment (1) according to one of claims 1 to 10, **characterised in that** the connecting tongues (9, 10, 11) are embodied as strips that extend around the periphery of the floor segment (1) and the cross-sections of which define trapezia the longer sides of which are remote from the centre of the floor segment (1).

12. Floor segment (1) according to one of claims 1 to 11, **characterised in that** side connecting tongues (9, 10) and corner connecting tongues (11) are provided, the side connecting tongues (9, 10) being formed along one side and the corner connecting tongues (11) being formed at a corner of the floor segment (1).

## Revendications

1. Elément de sol transportable (1) comportant au moins une couche d'absorption (2) et au moins une couche de répartition de charge (3) reliée à celle-ci, des éléments de réception (6, 7, 8) et des languettes de liaison (9, 10, 11) correspondantes étant prévus sur le pourtour en vue d'une liaison des éléments de sol (1) pouvant être interrompue, **caractérisé en ce que** la couche de répartition de charge (3) comporte plusieurs plaques (4) qui sont réalisées sous forme de plaques de polychlorure de vinyle renforcées au moyen de fibres de verre, ou sous forme de plaques d'aggloméré de bois, et **en ce que** la couche d'absorption (2) comporte plusieurs strates de couches d'amortissement (5) reliées entre elles, un adhésif polymère (12) du type silane modifié doté d'une élasticité durable, exempt de solvant et résistant au vieillissement, étant prévu en vue de la liaison de la couche d'absorption (2) avec la couche de répartition de charge (3).

2. Elément de sol (1) selon la revendication 1 **caractérisé en ce que** les couches d'amortissement (5) ont une épaisseur, une rigidité ou une propriété d'amortissement égales ou différentes.

3. Elément de sol (1) selon une des revendications 1 ou 2 **caractérisé en ce que** les plaques (4) sont réalisées sous forme de plaques à plusieurs couches collées et/ou pressées ensemble.

4. Elément de sol (1) selon une des revendications 1 à 3 **caractérisé en ce que** les plaques (4) sont collées ensemble au moyen d'un adhésif polymère (12) du type silane modifié doté d'une élasticité durable, exempt de solvant et résistant au vieillissement.

5. Elément de sol (1) selon une des revendications 1 à 4 **caractérisé en ce que** l'élément de sol (1) est réalisé de manière à être élastique superficiellement, ponctuellement ou à présenter une élasticité mixte.

6. Elément de sol (1) selon une des revendications 1 à 5 **caractérisé en ce que** la couche (3) de répartition de charge est recouverte au moyen d'un revêtement supérieur de matière de synthèse ou de linoléum.

7. Elément de sol (1) selon une des revendications 1 à 6 **caractérisé en ce que** l'élément de sol (1) présente une dégradation de force selon la norme EN 14904 supérieure à 25 %, de préférence comprise entre 35 % et 40 %.

8. Elément de sol (1) selon une des revendications 1 à 7 **caractérisé en ce que** l'élément de sol (1) présente une déformabilité selon la norme EN 14904 comprise entre 1,1 mm et 1,5 mm, qui est de préférence de 1,3 mm.

9. Elément de sol (1) selon une des revendications 1 à 8 **caractérisé en ce que** les éléments de réception (6, 7, 8) sont réalisés sous forme d'échancrures qui s'étendent sur la périphérie de l'élément de sol (1) et dont les profils définissent des trapèzes dont les grands côtés sont orientés vers le centre de l'élément de sol (1).

10. Elément de sol (1) selon une des revendications 1 à 9 **caractérisé en ce que** des éléments de réception latéraux (6, 7) et des éléments de réception d'angle (8) sont prévus, les éléments de réception latéraux (6, 7) étant réalisés le long d'un côté et les éléments de réception d'angle étant réalisés à un angle de l'élément de sol (1).

11. Elément de sol (1) selon une des revendications 1 à 10 **caractérisé en ce que** les languettes de liaison (9, 10, 11) sont réalisées sous forme d'entretoises qui s'étendent à la périphérie de l'élément de sol (1) et dont les profils définissent des trapèzes dont les grands côtés sont orientés à l'écart du centre de l'élément de sol (1).

12. Elément de sol (1) selon une des revendications 1 à 11 **caractérisé en ce que** des languettes de liaison latérales (9, 10) et des languettes de liaison d'angle (11) sont prévues, les languettes de liaison latérales (9, 10) étant réalisées le long d'un côté et les languettes de liaison d'angle (11) étant réalisées à un angle de l'élément de sol (1).
